# EUROPEAN PATENT APPLICATION

(11) **EP 4 718 060 A1**
(43) Date of publication of application: **01.04.2026**
(21) Application number: 24306581.0
(22) Date of filing: 27.09.2024
(51) Int. Cl.: G01N 21/17, G01N 21/3563, G01N 21/84, G01N 21/88, G01B 11/02, G01N 25/72

(54) **RADIOMETRY MEASURING DEVICE**

(71) Applicant: Enovasense, 94110 Arcueil (FR)
(72) Inventor: INARD-CHARVIN, Jean, 93100 Montreuil (FR); TAKTAK, Rami, 91300 Massy (FR); LANCELOT, Julien, 92140 Clamart (FR); MAI, Khanh-Linh, 77600 Bussy-Saint-Georges (FR)
(74) Representative: Jacobacci & Partners France

(57) **Abstract**

The invention relates to a radiometry measuring device (100) comprising:
- a laser source (110) adapted to produce a laser beam (120),
- a projection unit (130) adapted to illuminate simultaneously at least two regions (11) of a sample (1) with the laser beam, the projection unit comprising a shaping optical unit (132) adapted to, before the laser beam illuminates the sample, increase a divergence of the laser beam and modify an intensity profile of the laser beam,
- a photothermal detection device (150) comprising at least two photosensitive elements (152), each photosensitive element being associated with one of the at least two regions of the sample and being adapted to detect a heat flow (140) radiated by said region, heated by the laser beam, and to deliver a measuring signal (S2) representative of said heat flow,
- a processing unit (160) configured to determine, for each photosensitive element, a property of its associated region of the sample based on the measuring signal delivered by said photosensitive element.

## Description

### TECHNICAL FIELD OF THE INVENTION

The invention relates to the field of radiometry.

More precisely the invention relates to a radiometry measuring device for determining a property of a sample.

### BACKGROUND INFORMATION AND PRIOR ART

Radiometry measuring devices allowing to measure properties of a sample in a non-destructive manner are commonly known.

Those devices are classically based on the illumination of the sample surface by a light beam such as a laser beam, focused on the sample surface and whose intensity is sinusoidally modulated over time, and on the detection of the radiated heat flow, typically in the infrared domain. The principle of this technology is that the retro-diffused signal, i.e. the heat flow, has the same frequency as the excitation laser beam. The phase shift between the intensity of the laser beam and the radiated heat flow can for instance be computed. Physical models then allow to correlate the phase shift to properties of the sample such as a coating thickness or a crack depth.

However, these devices measure properties of the sample one point at a time. The sample must thus be scanned, point by point, to measure properties of the sample over a large surface thereof. For instance, in document FR3080445, a measuring head is motorized to be able to sequentially illuminate different regions of the sample and also to collect the radiated heat flow in order to conduct it towards an infrared mono-detector. When it is possible, the sample could also be placed on a motorized stage so as to be moved with respect to the laser beam and the detector.

These devices thus suffer from a low acquisition speed when measuring properties of the sample over a large area is needed.

### SUMMARY OF THE INVENTION

In this context, one object of the invention is to provide a faster radiometry measuring device.

This invention more particularly proposes a radiometry measuring device comprising:
- a laser source adapted to produce a laser beam,
- a projection unit adapted to illuminate simultaneously at least two regions of a sample with the laser beam, the projection unit comprising a shaping optical unit adapted to, before the laser beam reaches the sample, increase a divergence of the laser beam and modify an intensity profile of the laser beam,

- a photothermal detection device comprising at least two photosensitive elements, each photosensitive element being associated with one of the at least two regions of the sample and being adapted to detect a heat flow radiated by said region, heated by the laser beam, and to deliver a measuring signal representative of said heat flow,
- a processing unit configured to determine, for each photosensitive element, a property of its associated region of the sample based on the measuring signal delivered by said photosensitive element.

Thanks to the shaping optical unit according to the invention, the laser beam illuminates a large portion of the surface of the sample, preferentially in a homogenous manner. This enlarged illumination, coupled with a detection device comprising several photosensitive elements, allows to measure the property of the sample at several locations at the same time, which greatly increases the acquisition speed.

In an advantageous manner, the shaping optical unit comprises at least one of a diffractive optical element, a refractive optical element, an optical fiber with a rectangular core.

This specific conception of the shaping optical unit makes it possible to build a compact and cost-efficient measuring device. Indeed, using a diffractive optical element, a refractive optical element or an optical fiber with a rectangular core allows to efficiently shape the intensity profile of the laser beam, so that it illuminates a large and controlled portion of the sample, with relatively small commercial optical elements.

Other advantageous and non-limiting features of the method according to the invention are the followings:
- the shaping optical unit comprises at least one of a diffractive optical element, a refractive optical element, an optical fiber with a rectangular core;
- the diffractive optical element is a multi-layer diffractive element;
- the refractive optical element comprises two microlens arrays oriented perpendicularly to each other along a propagation direction of the laser beam, or a diffusing element;
- the optical fiber has a length of at least 100 cm;
- the shaping optical unit is adapted to modify the intensity profile of the laser beam such that it presents a flat-top intensity profile in a plan transverse to a propagation direction of the laser beam;
- the flat-top intensity profile of the laser beam forms a rectangular plateau;
- the surface of the two regions of the sample illuminated by the laser beam is comprised between 10 mm² and 125 000 mm²;
- over the at least two regions of the sample illuminated by the laser beam, the intensity of the laser beam varies by less than 10%;
- the surface of the sample comprised in a field of view of the photothermal detection device is smaller than the surface of the sample illuminated by the laser beam;
- the laser source comprises a laser diode;
- the radiometry measuring device further comprising a sensor adapted to measure a temporal sinusoidal modulation of the intensity of the laser beam and to deliver a reference signal representative of said modulation, and the processing unit is configured to calculate, for each photosensitive element, the property of its associated region of the sample based on a phase shift between the reference signal and the measuring signal delivered by said photosensitive element;
- the photothermal detection device comprises a rolling shutter, the photosensitive elements delivering the measuring signals sequentially, and the processing unit is configured to temporally associate each measuring signal to a sub-reference signal extracted from the reference signal synchronously with the delivering of said measuring signal, the processing unit is configured to calculate, for each photosensitive element, the property of its associated region of the sample based on a phase shift between the measuring signal delivered by said photosensitive element and the sub-reference signal synchronously extracted with it.

### DETAILED DESCRIPTION OF EXAMPLE(S)

The following description, enriched with joint drawings that should be taken as non-limitative examples, will help understand the invention and figure out how it can be realized.

In the accompanying drawings:
- Figure 1 is a schematic representation of a radiometry measuring device according to the invention,
- Figure 2 is a schematic representation, at three successive time points, of a matrix of photosensitive elements of a photothermal detection device of the radiometry measuring device of figure 1, and
- Figure 3 is a graphical representation showing, over time (t), of a measuring signal delivered by the photosensitive element of figure 2 and a reference signal representing an intensity of an irradiating laser beam produced by the radiometry measuring device of figure 1.

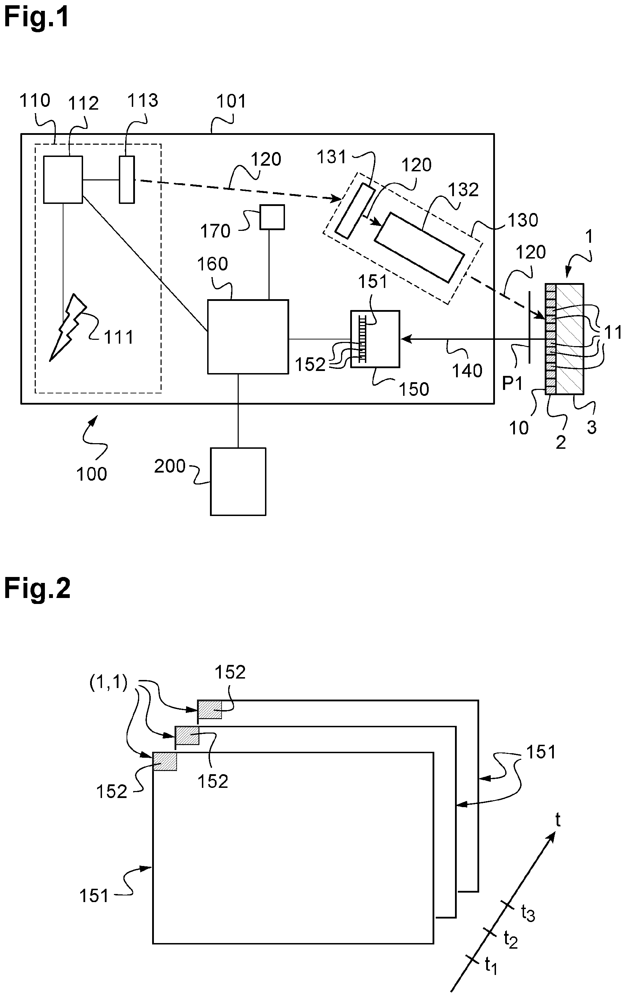

A radiometry measuring device 100 according to the invention is represented in figure 1. Conventionally, the radiometry measuring device 100 is designed to illuminate a sample 1 with a light flow and to measure electromagnetic radiations coming from the sample 1 in response to said illumination. The radiometry measuring device 100 is used for measuring properties of the sample 1, for instance a coating thickness, a crack depth, a presence of surface defects, a presence of lack of contact or adhesion between two materials, or a change in material properties such as: thermal diffusivity, density, thermal conductivity.

The sample 1 is here a layer of a material which is substantially flat, its length and width being greatly superior to its thickness (which corresponds to the right-left direction in figure 1).

As shown in figure 1, the radiometry measuring device 100 comprises the following main components:
- a laser source 110,
- a projection unit 130,
- a photothermal detection device 150,
- a processing unit 160.

As represented in figure 1, the radiometry measuring device 100 also comprises a casing 101 housing those components. As a variant, distinct casings may house the different components of the device.

The laser source 110 is adapted to produce a laser beam 120. To this end, the laser source 110 comprises a power supply 111, which is for instance connected to a local power grid, and a current generator 112. Here, the current generator 112 comprises a low-frequency sinusoidal voltage source and a current regulator which converts sinusoidal voltage variations into current variations. The current generator 112 thus generates, as a function of a frequency setting, an electric current whose intensity is sinusoidally modulated over time.

The sinusoidal current generated by the current generator 112 forms a control signal delivered to a light source 113 of the laser source 110. In other words, the current generator 112 forms a driver of the light source 113. Therefore, the laser beam 120 produced by the laser source 110 also has an intensity (and thus also a power), which is sinusoidally modulated over time, at the frequency of the control signal. The laser beam 120 is for instance sinusoidally modulated at a frequency comprised between 0,01 Hz and 50 Hz. In addition, the intensity of the laser beam 120 may be squared with an adjustable duty cycle.

The light source 113 is here a laser diode 113, and more particularly a fiber-coupled laser diode. In other words, the laser source 110 has an integrated optical fiber. The laser diode 113 emits the laser beam 120. The wavelength of the laser beam 120 emitted by the laser diode 113 is for instance comprised between 400 nm to 12 µm. The laser diode 113 has for instance a maximum optical power which is comprised between 1 and 1000 watts.

Alternatively, the light source of the laser source may be, for example, a laser, such as a gas laser, a solid-state laser or a doped fiber laser.

The projection unit 130 is adapted to illuminate the sample 1 with the laser beam 120 produced by the laser source 110. The projection unit 130 comprises optical elements shaping the laser beam 120 and guiding the laser beam 120 towards the sample 1 such that the laser beam 120 irradiated an external surface 10 of the sample 1. As figure 1 illustrates it, the projection unit 130 is therefore placed, on the optical path of the laser beam 120, between the laser source 110 and the sample 1. Put differently, the laser beam 120 (after its producing by the laser source 110) propagates through the projection unit 130 before reaching the sample 1. The laser beam 120 may be guided to the projection unit 130, at least partly, by the integrated optical fiber of the laser source 110.

As represented in figure 1, the projection unit 130 firstly comprises a collimation unit 131 adapted to collimate the laser beam 120, that is to say to reduce its divergence. The divergence of the laser beam 120 is here quantified by divergence angles. When exiting the laser source 110 (in particular when exiting the integrated optical fiber), the light beam 120 emitted by the laser source 110 has a high emission, that is to say a high divergence angle, for example between 10 and 40 degrees. Thanks to the collimation unit 131, the laser beam 120 has a smaller divergence after the collimation unit 131, typically less than 5 degrees.

The collimation unit 131 is here formed by an aspherical lens corrected for optical aberrations in the emission wavelength range of the laser diode 113. Alternatively, the collimation unit may comprise a doublet of lenses.

In a remarkable manner, the projection unit 130 then comprises a shaping optical unit 132. Here, the shaping optical unit 132 is positioned after the collimation unit 131 on the optical path of the laser beam 120. The shaping optical unit 132 has two distinct effects on the laser beam 120 going through it.

Firstly, the shaping optical unit 132 is adapted to increase the divergence of the laser beam 120. As it clearly appears later on, it allows illuminating a large area of the sample 1, which greatly increases the measuring speed of the radiometry measuring device 100. After the shaping optical unit 132, the laser beam 120 has for instance a divergence angle comprised between 2 and 20 degrees.

Secondly, the shaping optical unit 132 is also adapted to modify the intensity profile of the laser beam 120. The intensity profile of the laser beam 120 corresponds to a spatial variation of the intensity of the laser beam 120 (complementary to the temporal sinusoidal modulation) which may be measured, at a given moment, along at least one direction transverse to the propagation direction of the laser beam 120. The propagation direction of the laser beam 120 is for instance parallel to a central ray of light of the laser beam 120.

Here, the intensity profile of the laser beam 120 is modified by the shaping optical unit 132 such that it presents a flat-top intensity profile with respect to a plan traverse to the propagation direction of the laser beam 120. Here, this transverse plan is a reference plan P1 parallel to a plan tangent to the external surface 10 of the sample 1. As the sample 1 is here substantially plan, said tangent plan corresponds to the external surface 10 of the sample 1 itself.

In the reference plan P1, the intensity of the laser beam 120 forms, spatially, a plateau in two dimensions. Put differently, in the reference plan P1, the intensity of the laser beam 120 is thus maximum, or substantially equal to its maximum, over a large area, by opposition to a punctual maximum which is for instance the case for a gaussian-shaped intensity profile (strictly decreasing in all directions from its maximum). By "substantially equal to its maximum" it is meant that the intensity of the laser beam 120 varies by less than 10%, preferentially by less than 5%, below its maximum. The intensity of the laser beam 120 is thus highly homogenous over the plateau.

Here, the flat-top intensity profile of the laser beam 120 advantageously forms a rectangular plateau. This rectangular shape corresponds to the one of a photosensitive surface of the photothermal detection device 150, and thus to the shape of the field of view of the photothermal detection device 150. Thanks to this rectangular shape, the energy of the laser beam 120 may be dedicated to the area of the sample 1 to be imaged by the photothermal detection device 150. Preferably, the intensity decrease outside of the plateau is sharp.

In order to shape the intensity profile of the laser beam 120, the shaping optical unit 132 may comprise different optical elements.

In a first embodiment, the shaping optical unit 132 comprises a diffractive optical element, commonly known as a DOE. The diffractive optical element relies solely on diffraction to shape the intensity profile of the laser beam 120. The diffractive optical element is specifically micro-structured, typically by etching its surface, to obtain the desired shape of the intensity profile of the laser beam 120.

Advantageously, the diffractive optical element gives access to high divergence angles for the laser beam 120 coming out of the shaping optical unit 132.

Preferentially, the diffractive optical element is a multi-layer diffractive element. Each layer is design to diffract light in a specific way and, when stacked on each other, they produce the desired shaping of the intensity profile of the laser beam 120.

Such a diffractive optical element is for instance marketed by the company Holo/Or under the reference ST-212-I-Y-A.

In a second embodiment, the shaping optical unit 130 comprises a refractive optical element.

The refractive optical element may for instance be formed by two fly's eye microlens arrays put together at an angle of 90° between each other. Such a refractive optical element allows achieving a high homogeneity of the flat-top intensity profile. Thanks to this refractive optical element, the intensity may vary very little, for instance by less than 1% below its maximum, over the plateau.

The refractive optical element may also be formed by one or more diffusers. The one or more diffusers create controlled far-field profiles with a well-defined angular distribution for partial incoherent light.

Such a refractive optical element is for instance marketed by the company Edmund Optics under the reference #64-489.

Advantageously, the one or more diffusers provide a good balance between the divergence for the laser beam 120 coming out of the optical unit 132, which may be relatively high, and the homogeneity of the flat-top intensity profile.

Such diffusers are for instance marketed by the company ThorLabs under the reference ED1-S20-MD.

In a third embodiment, the shaping optical unit 132 comprises an optical fiber with non-circular core. Here, the shape of the core of the optical fiber refers more particularly to the shape of a section of the core which is perpendicular to the longitudinal dimension, i.e. the length, of the optical fiber. Here, the shaping optical unit comprises only the optical fiber.

Preferentially, the core of the optical fiber has a rectangular section, which provides a rectangular plateau intensity profile of the laser beam 120. The optical fiber is for instance a multimode fiber with a square core having a width of 150 µm.

Preferentially, the optical fiber is longer than 100 cm, which increases the homogeneity of the intensity over the plateau.

In all embodiment, shaping the intensity profile of the laser beam 120 may thus be obtained by optical elements with small size. As an example, fly's eyes microlens arrays may measure as little as 5x5 mm². Therefore, the dimensions of the shaping optical unit 132 may be limited, which enable the radiometry measuring device 100 to be built in a compact way.

As shown in figure 1, the laser beam 120 coming out of the projection unit 130, and thus out of the shaping optical unit 132, is oriented towards the sample 1. Here, the laser beam 120 is oriented such that it has an incidence angle on the sample comprised between 0 and 45 degrees.

Thanks to the shaping optical unit 132, the laser beam 120 has an enlarged intensity profile at the external surface 10 of the sample 1. It can thus advantageously illuminate simultaneously (without scanning) a large area of the sample 1.

This large area of the sample 1 illuminated by the laser beam 120 includes, i.e. covers, several regions 11 of the sample 1. The regions 11 of the sample 1 are distinct portions of the sample 1, and more particularly of the external surface 10 of the sample 1, which are juxtaposed to each other, that is to say arranged side by side in contact with each other. Here, as shown in figure 1, the plurality of regions 11 forms the external surface 10 of the sample 1. As detail thereafter, those regions 11 are defined in correspondence with the photothermal detection device 150 imaging the sample 1.

The surface of the sample 1 illuminated by the laser beam 120 is for instance comprised between 10 mm² and 125 000 mm². Along a given direction perpendicular to the direction of propagation, the spatial extent of the laser beam 120, which is usually called width, can be defined as the length of a segment for which the intensity is greater than half the maximum intensity, such a segment corresponds to the full width at half maximum (FWHM). In the same way, the surface of the sample 1 illuminated by the laser beam 120 may be defined as the surface for which the intensity is greater than half the maximum intensity.

The sample 1 is for instance located between 10 mm and 500 mm from the radiometry measuring device 100. The optical power delivered by the laser beam 120 on the surface of the sample 1 is for instance comprised between 1 W and 1000 W.

Here, since the intensity of the laser beam 120 varies by less than 10% below its maximum over the plateau in the reference plan P1, the intensity of the laser beam 120 over the regions 11 of the sample 1 which are spatially covered by this plateau also varies by less than 10%.

The illumination, i.e. the irradiation, of the sample 1 by the laser beam 120, has the effect of heating the sample 1 as a result of the absorption of the laser beam 120 optical power by the sample 1. Due to this heating, the sample 1 emits a radiated heat flow 140 through thermal radiation.

This radiated heat flow 140, which can be measured in watts, is linked to the temperature reached by the regions 11 of the sample 1 heated by the laser beam 120, that is to say here the regions 11 covered by the flat-top portion of the intensity profile of the laser beam 120. Generally, given the reached temperatures, the radiated heat flow 140 is emitted in the infra-red wavelength range.

As the intensity, and thus the optical power, of the light beam 120 is modulated over time, the optical power absorbed by the sample 1 also varies over time so that the heating of the sample 1 also oscillates over time, at the same modulation frequency as that of the intensity of the laser beam 120.

Consequently, the heat flow 140 radiated by the regions 11 of the sample 1 irradiated by the laser beam 120 varies as a function of time. As described hereinafter, measuring the variations of this radiated heat flow 140 by means of the photothermal detection device 150 allows to determine properties of the sample 1.

As shown in figure 1, the heat flow 140, radiated by the regions 11 of the sample 1 heated by the laser beam 120, propagates (among other directions) towards the photothermal detection device 150.

The photothermal detection device 150 comprises in particular a matrix 151 of photosensitive elements 152. By way of an example, here, the matrix 151 comprises 384 by 288 photosensitive elements 152. This matrix 151 is classically positioned at the focal plane of the photothermal detection device 150 which comprises optical elements (not represented) adapted to guide incoming electromagnetic radiations, and in particular the heat flow 140, onto the matrix 151 of photosensitive elements 152. The photosensitive elements 152 are made of semi-conductor materials or microbolometers and are adapted to convert photons into electric signals.

Here, the photothermal detection device 150 is more partially a long-wave infrared camera ("LWIR") based the microbolometer technology. In other words, each photosensitive element 152 is a microbolometer pixel unit which converts the heat generated by a photon into a change in resistance and then into an electrical signal. Advantageously, the microbolometer technology is a well-developed industry with very accessible cost-effective products and the wavelengths of the heat flow 140, which correspond typically to those of a black body heated between 0°C and 85°C, are always situated inside the operating wavelength range of the microbolometer pixel units. The microbolometer pixel units may be cooled or uncooled.

As a variant, the photothermal detection device is a mid-wave infrared camera ("MWIR") based on semi-conductor pixel units.

Here, each photosensitive element 152 detects a portion of the heat flow 140, and more particularly a portion of the heat flow 140 which is radiated by one of the regions 11 heated by the laser beam 120. Here, each photosensitive element 152 is thus associated with one region 11 of the sample 1 in a bijective manner. Put differently, each photosensitive element 152 is associated to one of the regions 11 of the sample 1 in the sense that it allows determining a property of said region 11 when said region 11 it heated by the laser beam 120 (this determination is presented below).

All regions 11 of the sample 1 heated by the laser beam 120 may not be associated with a photosensitive element 152 of the photothermal detection device 150. However, such a configuration is not energy-optimized as some regions 11 are unnecessarily heated.

Therefore, preferentially, all the regions 11 of the sample 1 heated by the laser beam 120 are associated with one of the photosensitive elements 152. Put differently, the surface of the sample 1 comprised in the field of view of the photothermal detection device 150 is smaller than the surface of the sample 1 illuminated by the laser beam 120 (i.e. encompassed by the plateau of the intensity profile of the laser beam).

Even more preferentially, the number of regions 11 of the sample 1 heated by the laser beam 120 is equal to the number of photosensitive elements 152, each region 11 being bijectivity associated with one of the photosensitive elements 152. This means that the surface of the sample 1 comprised in the field of view of the photothermal detection device 150 is equal to the surface the sample 1 illuminated by the laser beam 120.

By way of an example, the field of view of the photothermal detection device 150 is 250x200 mm². In the most energy efficient configuration, when the surface in the field of view of the photothermal detection device 150 corresponds to the one illuminated by the laser beam 120, the regions 11 may be defined as 0,65 mm by 0,70 mm surface portions of the sample 1 and each region 11 is thus associated with one specific photosensitive element 152 of the photothermal detection device 150.

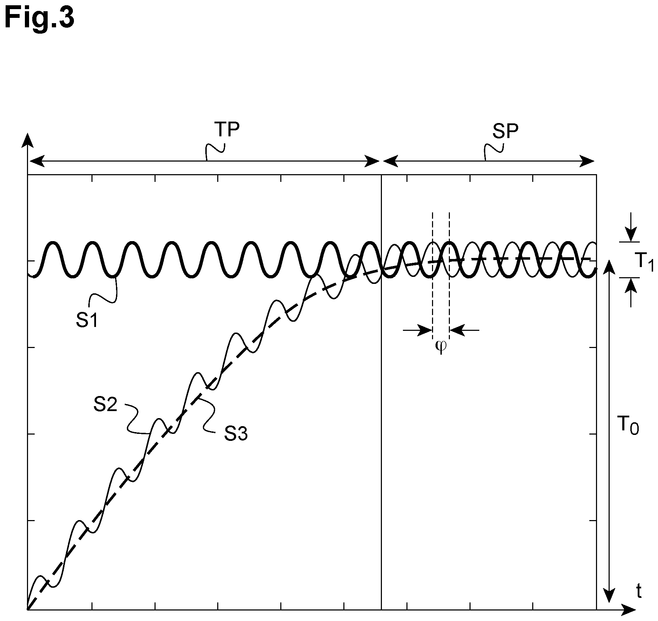

Each photosensitive element 152 delivers a measuring signal representative of the portion of the heat flow 140 it detects. As the heat flow 140, each measuring signal also oscillates as a function of time, at the same modulation frequency as the one of the intensity of the laser beam 120. In addition (situation not represented in figure 3), each measuring signal may also oscillate according to the squared modulation at the frequency of the duty cycle. The measuring signals delivered by the photosensitive elements 152 are electric signals which are received by the processing unit 160 through connections means.

The processing unit 160 is configured to calculate, for each photosensitive element 152, a property of the region 11 of the sample 1 (which is heated by the laser beam 140) associated with said photosensitive element 152. To this end, the processing unit 160 is programmed to analyze, by signal processing, each measuring signal it receives.

The radiometry measuring device 100 may be connected to an interface 200 which is for instance adapted to visualize data produced by the radiometry measuring device 100, to modify settings of the radiometry measuring device 100 or to command data acquisition.

The signal processing technics which are implemented by the processing unit 160 in order to determine a property of the regions 11 illuminated by the laser beam 120 are conventional in the field of radiometry measurements.

Here, these signal processing technics are exemplified in the context of determining a thickness of a coating 2 of the sample 1. In other words, the property associated with the regions 11 of the sample 1 is the thickness of its coating.

As represented in figure 1, the coating 2 is a layer of steel deposited on a metallic aluminum substrate 3. As illustrated in figure 1, the regions 11 of the sample 1 are distinct portions of the coating 2. Of course, it is possible to use the radiometry measuring device 100 to measure the thickness of a layer of material on its own, in the form of a plate or thin film with a thickness much less than its length and width.

The process of determining the thickness of the coating 2 begins with a step of heating the coating 2 of the sample 1 by irradiating the coating 2 with the laser beam 120, which is, as described above, produced by the laser source 110 and guided towards the sample 1 by the projection unit 130. The intensity of the laser beam 120 is sinusoidally modulated over time, for instance at 1 Hz. Several regions 11 of the sample are simultaneously heated by the laser beam 120 (those comprised in the intensity plateau).

The process then continues with a step of detecting the retro-diffused heat flow 140, radiated by said regions 11, by means of the photothermal detection device 150. In this example, each photosensitive element 152 is associated with one of said regions 11. Each photosensitive elements 152 thus detects a portion of the heat flow 140 and produces a measuring signal.

The sampling frequency of the photothermal detection device 150, i.e. its frame rate, is here at least twice as high as the modulation frequency of the laser beam 120 so that the Shannon-Nyquist sampling criterion is respected.

In the following, the processing of one of the measuring signals, referenced to as the measuring signal S2, by the processing unit 160 is described in detail. The measuring signal S2 is for instance produced by the photosensitive element 152 represented by the coordinated (1,1) in the matrix 11 in figure 2. The measuring signal S2 is formed by the output signal of the photosensitive element 152 being sampled, for instance at times t₁, t₂ and t₃ represented in figure 3.

The process then comprises a step of computing a phase shift φ between a reference signal S1 representative of the sinusoidal modulation of the intensity of the laser beam 120 over time and the measuring signal S2.

The processing means 160 are here configured to perform a few sub-steps of signal processing (windowing, filtering, Fourier transform...) to extract a sinusoidal component of the measuring signal S2 which is modulated at the modulation frequency of the laser beam 120, that is to say which is modulated at the same frequency as the sinusoidal modulation of the intensity of the laser beam 120. Indeed, the measuring signal S2 is also composed of a carrier component S3 representing the mean temperature elevation of the sample 1 due to a long exposure to the laser beam 120. This carrier component S3 is in particular increasing during transitory phase, referenced TP in figure 3, wherein the sample 1 is globally and slowly (in comparing of the modulation frequency of the laser beam) heated by the laser beam 120 up to a mean temperature, referenced T₀ in figure 3.

Preferentially, it is possible to wait for a stationary phase, referenced SP in figure 3, after the transitory phase, in which the sample 1 has reached a stable global temperature and in which the carrier component S3 is globally constant. The measuring signal S2 only varies due to its sinusoidal component, as a result of the laser induced sinusoidal variation of temperature of the regions 11, which amplitude T₁ is represented in figure 3. Filtering is thus simplified.

The phase shift φ is more particularly calculated between the reference signal S1 and the sinusoidal component of the measuring signal S2.

The reference signal S1 representative of the sinusoidal modulation of the intensity of the laser beam 120 is for instance obtained from the control signal delivered by the current generator 112 to drive the laser diode 113 (as represented by the link between blocs 112 and 160 in figure 1). The delay between the phase of the control signal and the phase of the intensity of the laser beam 120 may be measured during a calibration step and then compensated for when calculating the phase shift φ.

However, the reference signal S1 is preferentially obtained by measuring the intensity of the laser beam 120. To this end, the radiometry measuring device 100 comprises a sensor 170, for instance a photodiode, adapted to measure the sinusoidal modulation of the intensity of the laser beam 120 and to deliver the reference signal S1. Measuring the reference signal S1 directly from the laser beam 120 allows to determine more accurately the phase shift φ, in particular since it removes the need of determining the above-mentioned delay between the phase of the control signal and the phase of the intensity of the laser beam 120.

The thickness of the coating 2 at the region 11 associated with the measuring signal S2 is then determined as a function of the phase shift φ using well-known relationships involving, in addition to said phase shift φ, different properties such as the material of the coating 2, the material of the substrate 1, and experimental conditions. Such a relationship is for instance given by FR3080445 page 30.

The general physical mechanism expressed by these relationships is the following: the thicker the coating is, the longer it takes for heat to propagate through and back in the coating before being radiated, and thus the greater the phase shift φ is. The phase shift φ is thus representative of the thickness of the coating 2.

Since the photothermal detection device 150 produces at the same time a plurality of measuring signals associated with the regions 11 illuminated by the laser beam 120, it clearly appears that the processing unit 160 is able to determine at the same time the thickness of the coating 2 (i.e. the property of the sample 1) for each of said regions 11 by parallelizing calculations. As a consequence, determining the thickness of the coating 2 can be rapidly performed over a large area of the sample 1 thanks to the measuring device 100. Put differently, the photothermal detection device 150 allows to image the thickness of the coating 2, in the sense that allows to construct a two-dimension representation of the thickness of the coating 2 by associating each photosensitive element 152 of the matrix 151 with a value of thickness.

The photothermal detection device 150 may comprise a global shutter which allows to read out the photosensitive elements 152 all at once. The measuring signals are thus delivered synchronously (at the same time) by the photosensitive elements 152 and the reference signal then allows to compute the phase shift φ associated with each measuring signal.

Here, in order to reduce the costs of the radiometry measuring device 100, the photothermal detection device 150 preferentially comprises a rolling shutter. The photosensitive elements 150 thus deliver the measuring signals sequentially. The photosensitive elements 152 are more specifically read out line by line. The measuring signals coming from a same line of photosensitive elements 152 in the matrix 151 are synchronized but delivered with a delay with respect to those of the previous line of photosensitive elements 152.

To compensate for this delay, and thus to compute accurate phase shifts φ for all the measuring signals, the processing unit 160 is configured to temporally associate each measuring signal to a sub-reference signal extracted from the reference signal synchronously with the delivering of said measuring signal.

In other words, each time a line of photosensitive elements 152 is sampled (i.e. each time a line of photosensitive elements 152 is read out), in order to produce measuring signals, the reference signal is also synchronously sampled (from the control signal or from the sensor 170) by means of a synchronized analog to digital converter. This sampling of the reference signal allows the processing unit 160 to build the sub-reference signal which is associated with said line of photosensitive elements 152, and thus with said measuring signals. In other words, the sub-reference signals are extracted from the reference signal, which is to this end acquired at a frequency high enough so that each sample can be associated to the read out of a line of photosensitive elements 152.

For each photosensitive element 150, the phase shift φ is thus computed between the sinusoidal component of its measuring signal and the sub-reference signal associated to it. The thickness of the coating 2 is then determined as previously described.

The invention is not limited to the embodiment described and represented in the figures, and any variant in accordance with the annexed claims may be provided.

For instance, the amplitude variation of sinusoidal component of the measuring signals could be used to detect surface defects of the sample.

## Claims

1. Radiometry measuring device (100) comprising:
- a laser source (110) adapted to produce a laser beam (120),
- a projection unit (130) adapted to illuminate simultaneously at least two regions (11) of a sample (1) with the laser beam (120), the projection unit (130) comprising a shaping optical unit (132) adapted to, before the laser beam (120) reaches the sample (1), increase a divergence of the laser beam (120) and modify an intensity profile of the laser beam (120),
- a photothermal detection device (150) comprising at least two photosensitive elements (152), each photosensitive element (152) being associated with one of the at least two regions (11) of the sample (1) and being adapted to detect a heat flow (140) radiated by said region (11), heated by the laser beam (120), and to deliver a measuring signal (S2) representative of said heat flow (140), and
- a processing unit (160) configured to determine, for each photosensitive element (152), a property of its associated region (11) of the sample (1) based on the measuring signal (S2) delivered by said photosensitive element (152).

2. Radiometry measuring device (100) according to claim 1, wherein the shaping optical unit (132) comprises at least one of a diffractive optical element, a refractive optical element, an optical fiber with a rectangular core.

3. Radiometry measuring device (100) according to claim 2, wherein the diffractive optical element is a multi-layer diffractive element.

4. Radiometry measuring device (100) according to claim 2 or 3, wherein the refractive optical element comprises two microlens arrays oriented perpendicularly to each other along a propagation direction of the laser beam (120), or a diffusing element.

5. Radiometry measuring device (100) according to any one of claims 2 to 4, wherein the optical fiber has a length of at least 100 cm.

6. Radiometry measuring device (100) according to any one of claims 1 to 5, wherein the shaping optical unit (132) is adapted to modify the intensity profile of the laser beam (120) such that it presents a flat-top intensity profile in a plan (P1) transverse to a propagation direction of the laser beam (120).

7. Radiometry measuring device (100) according to claim 6, wherein the flat-top intensity profile of the laser beam (120) forms a rectangular plateau.

8. Radiometry measuring device (100) according to any one of claims 1 to 7, wherein the surface of the two regions (11) of the sample (1) illuminated by the laser beam (120) is comprised between 10 mm² and 125 000 mm².

9. Radiometry measuring device (100) according to any one of claims 1 to 8, wherein, over the at least two regions (11) of the sample (1) illuminated by the laser beam (120), the intensity of the laser beam (120) varies by less than 10%.

10. Radiometry measuring device (100) according to any one of claims 1 to 9, wherein the surface of the sample (1) comprised in a field of view of the photothermal detection device (150) is smaller than the surface of the sample (1) illuminated by the laser beam (120).

11. Radiometry measuring device (100) according to any one of claims 1 to 10, wherein the laser source (110) comprises a laser diode (113).

12. Radiometry measuring device (100) according to any one of claims 1 to 11, further comprising a sensor (170) adapted to measure a temporal sinusoidal modulation of the intensity of the laser beam (120) and to deliver a reference signal (S1) representative of said modulation, and wherein the processing unit (160) is configured to determine, for each photosensitive element, the property of its associated region of the sample (1) based on a phase shift (φ) between the reference signal (S1) and the measuring signal (S2) delivered by said photosensitive element (152).

13. Radiometry measuring device (100) according to claim 12, wherein the photothermal detection device (150) comprises a rolling shutter, the photosensitive elements (152) delivering the measuring signals (S2) sequentially, and wherein the processing unit (160) is configured to temporally associate each measuring signal (S2) to a sub-reference signal extracted from the reference signal (S1) synchronously with the delivering of said measuring signal (S2), the processing unit (160) is configured to determine, for each photosensitive element (152), the property of its associated region (11) of the sample (1) based on a phase shift (φ) between the measuring signal (S2) delivered by said photosensitive element (152) and the sub-reference signal synchronously extracted with it.
